# EUROPÄISCHE PATENTSCHRIFT

(11) **EP 2 993 487 B1**
(45) Veröffentlichungstag und Bekanntmachung des Hinweises auf die Patenterteilung: **21.12.2016**
(21) Anmeldenummer: 15001948.7
(22) Anmeldetag: 01.07.2015
(51) Int. Cl.: G01S 13/02, G01S 7/40

(54) **ANORDNUNG UND VERFAHREN ZUR EINSTELLUNG DER HÖHE ÜBER SEE EINER RADARANTENNE**
ASSEMBLY AND METHOD FOR ADJUSTING THE ALTITUDE ABOVE SEA LEVEL OF A RADAR ANTENNA
SYSTEME ET PROCEDE DE REGLAGE DE LA HAUTEUR PAR RAPPORT AU NIVEAU DE LA MER D'UNE ANTENNE RADAR

(30) Priorität: 03.09.2014 DE 102014013094
(43) Veröffentlichungstag der Anmeldung: 09.03.2016
(73) Patentinhaber: Airbus DS Electronics and Border Security GmbH, 82024 Taufkirchen (DE)
(72) Erfinder: Hofele, Franz-Xafer, 73072 Donzdorf (DE); Strecker, Andreas, 73066 Uhingen (DE)
(74) Vertreter: Meel, Thomas

(56) Entgegenhaltungen:
- FR-A1- 2 667 582
- CAO ZHONG-QING ET AL: "Effects of antenna height on detection of Microwave over-the-horizon radar", ANTENNAS, PROPAGATION&EM THEORY (ISAPE), 2012 10TH INTERNATIONAL SYMPOSIUM ON, IEEE, 22. Oktober 2012 (2012-10-22), Seiten 353-355, XP032301251, DOI: 10.1109/ISAPE.2012.6408783 ISBN: 978-1-4673-1799-3
- RAO D N ET AL: "Prolonged signal fade-out and effect of antenna height on the performance of a line-of-sight microwave link in a hilly terrain", INTERNATIONAL GEOSCIENCE AND REMOTE SENSING SYMPOSIUM, 1993. IGARSS' 93. BETTER UNDERSTANDING OF EARTH ENVIRONMENT. TOKYO, JAPAN 18-21 AUG. 1993, NEW YORK, NY, USA,IEEE, 18. August 1993 (1993-08-18), Seiten 264-266, XP010114202, DOI: 10.1109/IGARSS.1993.322545 ISBN: 978-0-7803-1240-1
- GUNASHEKAR S D ET AL: "Important aspects of transhorizon propagation at 2 GHz over the English Channel", ANTENNAS AND PROPAGATION, 2006. EUCAP 2006. FIRST EUROPEAN CONFERENCE ON, IEEE, PISCATAWAY, NJ, USA, 6. November 2006 (2006-11-06), Seiten 1-6, XP031393433, ISBN: 978-92-9092-937-6

## Beschreibung

Die Erfindung betrifft eine Anordnung und ein Verfahren zur Einstellung der Höhe über See einer Radarantenne gemäß den Merkmalen des Patentanspruchs 1 und gemäß den Merkmalen des Patentanspruchs 8.

Bei der Detektion von Seezielen mittels Radar hat sich gezeigt, dass die Reichweite der von einer Radarantenne emittierten Radarstrahlung stark von den herrschenden meteorologischen Bedingungen abhängt.

Bei meteorologischen Bedingungen wird zwischen Refraction, Subrefraction, Superrefraction und Duct unterschieden. Eine Fehlerquelle bei der Radarmessung ist die Variabilität der Dichte der Atmosphäre. Die Dichte wird unter anderem durch die Temperatur, die Luftfeuchte und den Druck bestimmt. Somit kommt es zu Unterschieden, sowohl vertikal zur Erdoberfläche als auch horizontal. Dies beeinflusst die Geschwindigkeit und die Richtung der Radarmessung. Bei Zunahme der Dichte wird die Ausbreitung der Wellen verlangsamt und bei Abnahme der Dichte nimmt die Geschwindigkeit der Wellen zu. Da bekanntlich mit zunehmender Höhe in der Atmosphäre die Dichte abnimmt, nimmt folglich die Geschwindigkeit der Ausbreitung der Wellen zu. Durch dieses Phänomen kommt es zur Krümmung der Radarkeule. Unter normalen Bedingungen der Atmosphäre ist der Kegel der Radarkeule ein wenig leichter als die Erdkrümmung gebogen. Dieser Zustand wird Refraction genannt. Wenn die Dichte mit der Höhe schneller als normal abnimmt, ist die Biegung der Refraction gegenüber der Erdkrümmung weniger stark gewölbt. Dieser Zustand wird Subrefraction genannt. Der Kegel des Radars verläuft über das Objekt und kann es damit nur teilweise oder gar nicht detektieren. Eine Superrefraction entsteht, wenn die Dichte mit der Höhe langsamer als im normalen Zustand abnimmt. Ein weiterer Fall ist das so genannte Ducting. Die Ursache ist die Gleiche wie bei der Superrefraction, nur noch stärker ausgeprägt. Bei meteorologischen Bedingungen wird unterschieden in Duct-Situationen zwischen Evaporation Duct, Surface Ducts und Elevated Duct. Evaporation Duct ist der sogenannte Verdunstungs-Duct, der direkt über der Meeresoberfläche auftritt. Dadurch ist die Krümmung des Kegels noch stärker als die Krümmung der Erdoberfläche. Die Signale treffen dadurch nicht auf die gewünschten Objekte und es kommt zu falschen Echos.

Bei bekannten Schiffsradarsystemen oder Radarsystemen zur Überwachung von Seegebieten wird eine Radarantenne in einer festen Antennen-Höhe betrieben. Ergänzend wird hierzu, insbesondere in maritimer Umgebung, eine sogenannte Duct-Antenne verwendet. Diese Duct-Antenne ist eine zusätzliche Antenne, welche nur wenige Meter über der Wasseroberfläche betrieben wird. Durch die vorgegeben Antennenhöhen kann die Radarantenne auf die vorherrschenden meteorologischen Bedingungen nicht angepasst werden, um eine optimale DetektionsReichweite zu erzielen. Somit kann die Erkennung einer Bedrohung insbesondere durch kleine Ziele nicht gewährleistet werden.

Ein Antennenmast mit einer Anordnung, mittels der eine Antenne entlang der Höhe des Antennenmasts verschiebbar ist, ist aus EP 1 198 024 A1 und aus FR 2 667 582 bekannt.

Ein Verfahren und eine Anordnung zur Bestimmung der Höhe eines Signalausbreitungspfades eines elektromagnetischen Signals in der Atmosphäre unter Berücksichtigung von meteorologischen Bedingungen ist aus US 4 041 491 A bekannt.

Aufgabe der Erfindung ist es, eine Anordnung anzugeben, mit welcher die Detektion von Seezielen bei unterschiedlichen meteorologischen Bedingungen zuverlässig möglich ist. Eine weitere Aufgabe besteht in der Angabe eines entsprechenden Verfahrens.

Die Aufgaben werden mit den Gegenständen der unabhängigen Patentansprüche gelöst. Weitere vorteilhafte Ausgestaltungen der Erfindung ergeben sich aus den Unteransprüchen, der Beschreibung und den Zeichnungen.

Die Anordnung nach der Erfindung umfasst einen Antennenmast, eine Radarantenne, eine erste und zweite Eingangsschnittstelle, eine Auswerteeinrichtung und eine Ausgangsschnittstelle. Die Radarantenne ist an dem Antennenmast höhenverschiebbar angeordnet. Zweckmäßig ist der Antennenmast derart eingerichtet, dass eine Radarantenne entlang des Masts höhenverschiebbar ist. Die Radarantenne kann z.B. mittels eines am Antennenmast vorgesehenen Aufzugs am Antennenmast bewegt werden.

Die erste Eingangsschnittstelle ist derart ausgebildet, um ein erstes Sensorsignal zu empfangen, das zum Vorhandensein einer Subrefractions-Schicht über See und zu einer Höhe und Dicke der Subrefractions-Schicht über See korrespondiert.

Eine zweite Eingangsschnittstelle ist derart ausgebildet ist, um ein zweites Sensorsignal zu empfangen, das zum Vorhandensein einer Evaporation-Duct-Schicht über See und zu einer Höhe und Dicke der Evaporation-Duct-Schicht über See korrespondiert. Im Folgenden soll der Begriff der Evaporation-Duct-Schicht auch sämtliche anderen Arten von Duct-Schichten abdecken, nämlich Surface Ducts und Elevated Ducts.

Die Auswerteeinrichtung ist ferner derart ausgebildet, um basierend auf dem ersten Sensorsignal und dem zweiten Sensorsignal eine Antennenhöhe über See zu ermitteln, welche zu einer maximalen Detektionsreichweite der Radarantenne korrespondiert.

Die Ausgangsschnittstelle ist derart ausgebildet, um ein Steuersignal auszugeben, das das Verschieben der Radarantenne auf die von der Auswerteeinrichtung bestimmte Antennenhöhe bewirkt. Insbesondere ist es möglich, dass die Ausgangsschnittstelle mit einem Aufzug verbunden ist. Dieser Aufzug kann an dem Antennenmast montiert sein und eine Halterung für die Radarantenne aufweisen. Insbesondere ist der Aufzug eingerichtet, um die Radarantenne in eine durch das Steuersignal vorgegebene Höhe zu verfahren. Zweckmäßig ist diese Höhe die Höhe der Radarantenne über der Meeresoberfläche.

Ein Vorteil der Anordnung ist, dass lediglich eine Radarantenne nötig ist, die mittels eines Aufzugs in der Höhe beliebig variiert werden kann. Es werden somit keine zwei fest installierten Antennen benötigt. Für jede beliebige meteorologische Bedingung kann die Antenne einfach und schnell mittels Aufzug in die zugehörige optimale Antennenhöhe gebracht werden, um eine optimale Radar Performance in Bezug auf die Radar-Reichweite zu garantieren. Hiermit wird eine bessere Statistik erzielt zur Erkennung bedrohlicher kleiner Ziele und somit kann eine höhere Sicherheit gewährleistet werden.

In einer Ausführungsform ist die Auswerteeinrichtung derart ausgebildet, dass eine erste Antennenhöhe ermittelt wird, wenn das an der ersten Eingangsschnittstelle empfangene erste Sensorsignal zu einem Nicht-Vorhandensein einer Subrefractions-Schicht über See korrespondiert. Diese erste Antennenhöhe kann z.B. 65m betragen. Beispielsweise kann als Radarantenne die des SPEXER 2000 Coastal Radars des Herstellers Airbus Space and Defence GmbH, Ottobrunn verwendet werden. Je nach Typ der Radarantennen kann die Antennenhöhe für den Fall des Nicht-Vorhandenseins einer Subrefractions-Schicht über See aber auch zwischen 60m und 70m betragen.

In einer weiteren Ausführungsform ist die Auswerteeinrichtung ausgebildet, eine zweite Antennenhöhe zu ermitteln, wenn das an der ersten Eingangsschnittstelle empfangene erste Sensorsignal zu einem Vorhandensein einer Subrefractions-Schicht über See in einer ersten vorgegebenen Höhe über See korrespondiert und wenn das an der zweiten Eingangsschnittstelle empfangene zweite Sensorsignal zu einem Vorhandensein einer Evaporation-Duct-Schicht über See einer zweiten Höhe über See oder mehr korrespondiert, wobei die erste Höhe über See kleiner als die zweite Höhe über See ist. Insbesondere kann bei einer Subrefractions-Schicht über See in Höhe von 11 m oder mehr, die Antennen auf eine Höhe von 4-10m positioniert werden. Beispielsweise kann als Radarantenne die des obengenannten SPEXER 2000 Coastal Radars verwendet werden.

In einer weiteren Ausführungsform ist die erste Antennenhöhe größer als die zweite Antennenhöhe. Dadurch wird gewährleistet, dass eine hohe DetektionsReichweite erreicht wird.

Bei genauer Kenntnis der Höhe über See der Evaporation-Duct-Schicht ist eine Feineinstellung für die Höhe der Radarantenne möglich. Diese Feineinstellung der Antennenhöhe bewirkt, dass sogenannte Detektionslöcher (skip zones) vermieden werden können.

In einer weiteren Ausführungsform ist ein mit der ersten Eingangsschnittstelle verbundener erster Sensor vorhanden, der ausgebildet ist, eine Subrefractions-Schicht zu detektieren und die Höhe und Dicke einer detektierten Subrefractions-Schicht über See zu erfassen und das zum Vorhandensein einer Subrefractions-Schicht und zu einer Höhe und Dicke der Subrefractions-Schicht über See korrespondierende erste Sensorsignal bereitzustellen. Ein solcher erster Sensor kann z.B. durch einem Fachmann bekannte Radiosonden realisiert werden. Es ist aber auch möglich das Vorliegen von Subrefraction, die Höhe und die Dicke der Subrefractions-Schicht mittels Clutter-Informationen der Radarantenne zu ermitteln.

In einer weiteren Ausführungsform ist ein mit der zweiten Eingangsschnittstelle verbundener zweiter Sensor vorhanden, der ausgebildet ist, eine Evaporation-Duct-Schicht zu detektieren und die Höhe und Dicke einer detektierten Evaporation-Duct-Schicht über See zu erfassen und das zum Vorhandensein einer Evaporation-Duct-Schicht und zu einer Höhe und Dicke der Evaporation-Duct-Schicht über See korrespondierende zweite Sensorsignal bereitzustellen. Ein solcher zweiter Sensor kann z.B. durch einem Fachmann bekannte Radiosonden realisiert werden. Es ist aber auch möglich das Vorliegen von Evaporation-Duct, die Höhe und die Dicke der Evaporation-Duct-Schicht mittels Clutter-Informationen der Radarantenne zu ermitteln.

Zweckmäßig können der erste und der zweite Sensor identisch ausgeführt sein und/oder in einen einzelnen Sensor integriert sein.

Das Verfahren der Erfindung zum Detektieren von Seezielen mittels einer Radarantenne, umfasst das Empfangen eines erstes Sensorsignals, das zum Vorhandensein einer Subrefractions-Schicht über See und zu einer Höhe und Dicke der Subrefractions-Schicht über See korrespondiert, das Empfangen eines zweiten Sensorsignals, das zum Vorhandensein einer Evaporation-Duct-Schicht über See und zu einer Höhe und Dicke der Evaporation-Duct-Schicht über See korrespondiert, das Ermitteln einer Antennenhöhe über See basierend auf dem ersten Sensorsignal und dem zweiten Sensorsignal, welche zu einer maximalen Detektionsreichweite der Radarantenne korrespondiert und das Ausgeben eines, das Verschieben der Radarantenne auf die ermittelte Antennenhöhe bewirkende Steuersignals.

Die Erfindung wird anhand von Figuren näher erläutert. Es zeigen:
- Fig.1: beispielhaft eine erfindungsgemäße Anordnung,
- Fig.2: beispielhaft ein erfindungsgemäßes Verfahren,
- Fig.3: beispielhaft die Entdeckungswahrscheinlichkeit bei Standard-Atmosphäre und Antennenhöhe=65m für ein Ziel mit RCS=1m²,
- Fig.4: beispielhaft die Entdeckungswahrscheinlichkeit bei Standard-Atmosphäre und Antennenhöhe=5m für ein Ziel mit RCS=1m²,
- Fig.5: beispielhaft die Entdeckungswahrscheinlichkeit bei Evaporation-Duct mit einer EDA=14m und Antennenhöhe=65m für ein Ziel mit RCS=1m²,
- Fig.6: beispielhaft die Entdeckungswahrscheinlichkeit bei Evaporation-Duct mit einer EDA=14m und Antennenhöhe=5m für ein Ziel mit RCS=1m²,
- Fig. 7: beispielhaft eine Anordnung gemäß den Bedingungen in Fig. 5,
- Fig. 8: beispielhaft eine Anordnung gemäß den Bedingungen in Fig. 6.

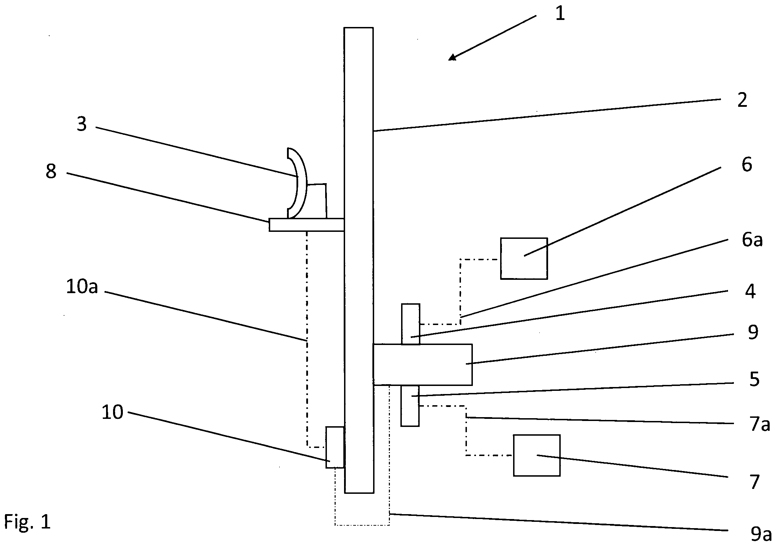

Fig. 1 zeigt beispielhaft die erfindungsgemäße Anordnung 1. Ein Antennenmast 2 weist eine Vorrichtung 8 auf, mit der eine Radarantenne 3 am Antennenmast 2 nach oben oder unten verschoben werden kann. Diese Vorrichtung 8 kann z.B. ein Aufzug sein. Die Radarantenne 3 ist fest mit dem Aufzug 8 verbunden, z.B. verschraubt. Die Radarantenne 3 ist ferner mittels Kabelverbindung (nicht dargestellt) mit den notwendigen und einem Fachmann bekannten Stromversorgungen (nicht dargestellt) und Signalauswerteeinrichtungen (nicht dargestellt) verbunden.

Die Anordnung 1 weist ferner eine erste Eingangsschnittstelle 4 auf. Diese erste Eingangsschnittstelle 4 ist mit einem Sensor 6 verbunden. Dieser Sensor 6 ist ausgebildet eine Subrefractions-Schicht zu detektieren und die Höhe und Dicke einer detektierten Subrefractions-Schicht über See zu erfassen und das zum Vorhandensein einer Subrefractions-Schicht und zu einer Höhe und Dicke der Subrefractions-Schicht über See korrespondierende erste Sensorsignal 6a bereitzustellen. Die erste Eingangsschnittstelle 4 ist eingerichtet, um dieses erste Sensorsignal 6a zu empfangen. Die erste Eingangsschnittstelle 4 ist hierbei derart eingerichtet, dass das erste Sensorsignal 6a mittels einer Kabel- oder Funkverbindung (gestrichelte Linie) übermittelt wird.

Die Anordnung 1 weist ferner eine zweite Eingangsschnittstelle 5 auf. Diese zweite Eingangsschnittstelle 5 ist mit einem zweiten Sensor 7 verbunden. Dieser zweite Sensor 7 ist ausgebildet, eine Evaporation-Duct-Schicht zu detektieren und die Höhe und Dicke einer detektierten Evaporation-Duct-Schicht über See zu erfassen und das zum Vorhandensein einer Evaporation-Duct-Schicht und zu einer Höhe und Dicke der Evaporation-Duct-Schicht über See korrespondierende zweite Sensorsignal 7a bereitzustellen. Die zweite Eingangsschnittstelle 5 ist hierbei derart eingerichtet, dass das zweite Sensorsignal 7a mittels einer Kabel- oder Funkverbindung (gestrichelte Linie) übermittelt wird.

Selbstverständlich ist es auch möglich, dass ein einzelner Sensor ausgebildet sein kann um eine Subrefractions-Schicht und eine Evaporation-Duct-Schicht sowie die entsprechenden Höhen und Dicken zu detektieren. Dieser einzelne Sensor kann zudem derart eingerichtet sein entsprechende Sensorsignale für die erste Eingangsschnittstelle 4 und die zweite Eingangsschnittstelle 5 zu erzeugen. Die Sensoren können sowohl lokal im unmittelbaren Bereich der Radarantenne oder des Radarsystems vorhanden sein. Sie können aber auch in entfernten Stationen vorhanden sein, z.B. Wetterstationen, mit der eine Kommunikationsverbindung besteht.

Die Anordnung 1 weist eine Auswerteeinrichtung 9 auf. Die erste Eingangsschnittstelle 4 und zweite Eingangsschnittstelle 5 sind mit der Auswerteinrichtung 9 verbunden, z.B. mittels einer Kabel- oder Funkverbindung. Diese Auswerteeinrichtung 9 ist ausgebildet, um basierend auf dem ersten Sensorsignal 6a und dem zweiten Sensorsignal 7a eine Antennenhöhe über See zu ermitteln, welche zu einer maximalen Detektionsreichweite der Radarantenne 3 korrespondiert.

Die Anordnung 1 weist eine Ausgangsschnittstelle 10 auf. Diese Ausgangsschnittstelle 10 ist mit der Auswerteeinrichtung 9 verbunden, z.B. mittels einer Kabelverbindung 9a. Die Ausgangsschnittstelle 10 ist ausgebildet, um ein Steuersignal 10a auszugeben, das das Verschieben der Radarantenne 3 auf die von der Auswerteeinrichtung 9 bestimmte Antennenhöhe bewirkt. Die Ausgangsschnittstelle 10 ist verbunden mit der Einrichtung 8 (z.B. ein Aufzug) zum Verschieben der Radarantenne 3. Diese Verschiebeeinrichtung 8 ist mit den einem Fachmann bekannten Strom- und Spannungsversorgungen (nicht dargestellt) verbunden. Ferner weist der Antennenmast 2 entsprechende Führungsschienen (nicht dargestellt) auf, in welchen die Verschiebeeinrichtung 8 entsprechend geführt und gelagert ist.

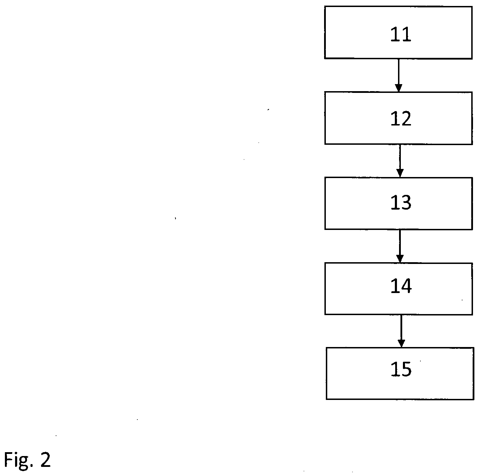

Fig. 2 zeigt schematisch das Verfahren zur Einstellung der Höhe über See der Radarantenne 3. Das erfindungsgemäße Verfahren weist einen ersten Schritt 11 auf zum Empfangen eines erstes Sensorsignals 6a. Dieses erste Sensorsignal 6a korrespondiert zum Vorhandensein einer Subrefractions-Schicht über See und zu einer Höhe und Dicke der Subrefractions-Schicht über See. In einem zweiten Schritt 12 wird ein zweites Sensorsignal 7a empfangen. Dieses zweite Sensorsignal 7a korrespondiert zum Vorhandensein einer Evaporation-Duct-Schicht über See und zu einer Höhe und Dicke der Evaporation-Duct-Schicht über See korrespondiert. Selbstverständlich können der erste Schritt 11 und zweite Schritt 12 auch vertauscht sein oder gleichzeitig stattfinden.

In einem dritten Schritt 13 wird basierend auf dem ersten Sensorsignal 6a und dem zweiten Sensorsignal 7a eine Antennenhöhe über See ermittelt, welche zu einer maximalen Detektionsreichweite der Radarantenne 3 korrespondiert. Insbesondere wird ein Signal 9a erzeugt, welches basierend auf dem ersten Sensorsignal 6a und dem zweiten Sensorsignal 7a, zu einer Antennenhöhe über See korrespondiert, bei welcher eine maximale Detektionsreichweite der Radarantenne 3 möglich ist.

In einem vierten Schritt 14 wird ein Steuersignal 10a ausgegeben, welches in einem weiteren Schritt 15 das Verschieben der Radarantenne 3 auf die in der Auswerteeinrichtung 9 ermittelte Höhe bewirkt. Das Steuersignal 10a wird zweckmäßig in der Auswerteeinrichtung 9 erzeugt und über die Ausgangsschnittstelle 10 an die Verschiebeeinrichtung 8 geleitet.

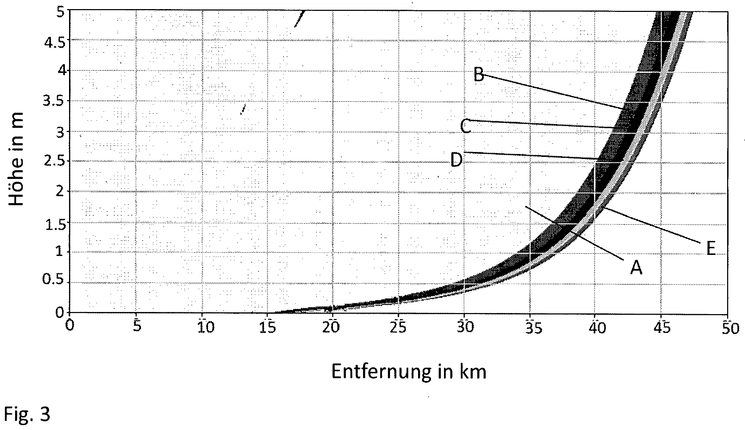

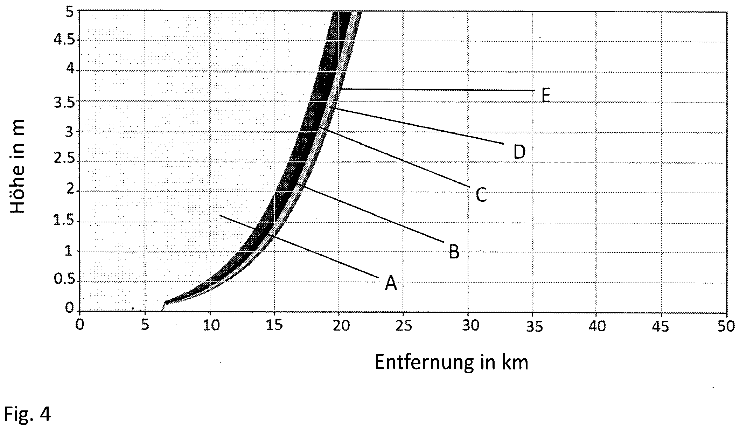

Fig. 3 und Fig. 4 zeigen beispielhaft die Entdeckungswahrscheinlichkeit bei Standard-Atmosphäre für ein Ziel mit RCS (Range Cross Section)=1m² bei einer Falschalarmwahrscheinlichkeit von 10⁻⁶. Fig. 3 zeigt dabei eine Darstellung für eine beispielhafte Antennenhöhe von 65m. Fig. 4 zeigt dabei eine Darstellung für eine beispielhafte Antennenhöhe von 5m.

In Weiteren sind die Bereiche der Entdeckungswahrscheinlichkeiten wie folgt dargestellt:
A Entdeckungswahrscheinlichkeit >90%
B Entdeckungswahrscheinlichkeit 80%-90%
C Entdeckungswahrscheinlichkeit 70%-80%
D Entdeckungswahrscheinlichkeit 60%-70%
E Entdeckungswahrscheinlichkeit 50%-60%

Mit Hilfe spezieller, einem Fachmann bekannter Radar-Softwaretools lassen sich Zusammenhänge zwischen Optimierung der Antennenhöhe und Optimierung der Entdeckungs-Reichweite, abhängig von aktuell vorherrschenden meteorologischen Bedingungen, herstellen. Wie oben bereits festgehalten, erhöhen Superrefraction und Ducting die Reichweite, während Subrefraction die Reichweite verringert. Bei Standard-Atmosphäre oder in Ducting-Situationen kann die Reichweite grundsätzlich vergrößert werden, wenn die Antennenhöhe erhöht wird.

Während wir bei einer Antennenhöhe von 5 m über See in einer Höhe von 2 m über der See bei einer Entdeckungswahrscheinlichkeit von 90% (Bereich A) nur eine Reichweite von bis zu 15 km erwarten können (Fig.4), liegt diese für eine Antennenhöhe von 65 m bei bis zu 38 km (Fig.3).

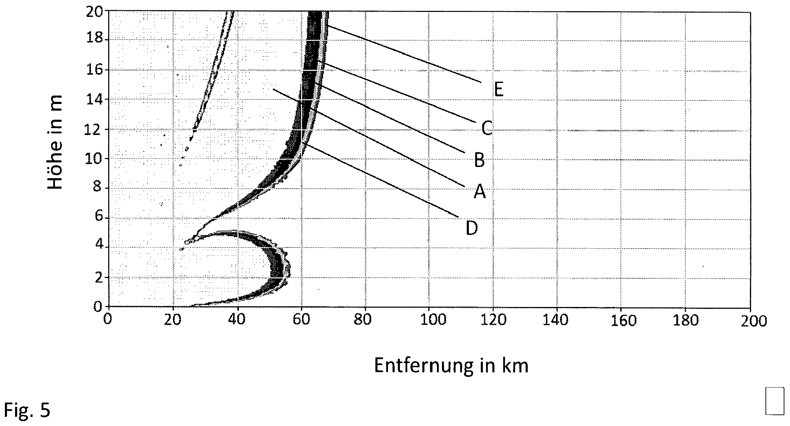

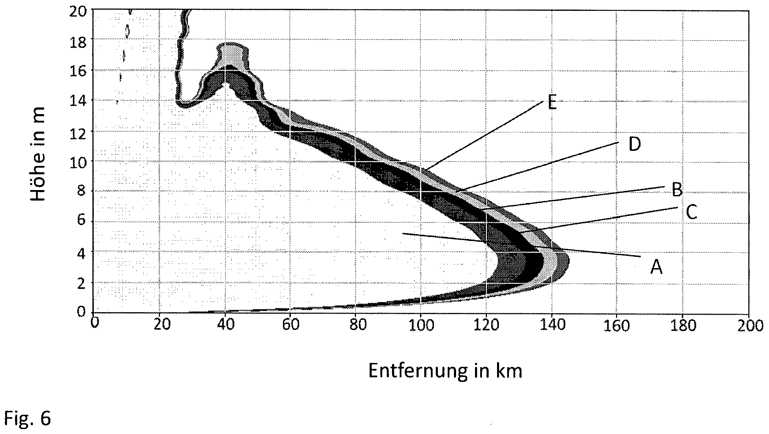

Im Weiteren wird eine Duct-Situation betrachtet, insbesondere eine Evaporation-Duct-Schicht der Höhe 11 m oder mehr direkt über der Wasseroberfläche. Fig.5 und Fig. 6 zeigen beispielhaft die Entdeckungswahrscheinlichkeiten bei Vorhandensein einer Evaporation-Duct-Schicht bei zwei unterschiedlichen Antennenhöhen. Fig. 5 zeigt beispielhaft die Darstellung für eine Antennenhöhe von 65 m. Es resultiert infolge der Existenz der Duct-Schichten bei einer Entdeckungswahrscheinlichkeit von 90% (Bereich A) in 2 m Höhe über See eine Reichweite von bis zu ca. 50 km.

Bei einer Antennenhöhe von 5 m (Fig.6) liegt die Antennenhöhe innerhalb der Evaporation-Duct-Schicht. In der Konsequenz ist die Voraussetzung für die Ausbildung einer Wellenleiter-ähnlichen sehr hohen Entdeckungsreichweite gegeben. In 2 m über See beträgt bei einer Entdeckungswahrscheinlichkeit von 90% (Bereich A) die Reichweite ca. 120 km, im Vergleich zu den Entfernungswerten, die in der Fig.4 erreicht wurden, eine wesentlich vergrößerte Reichweite.

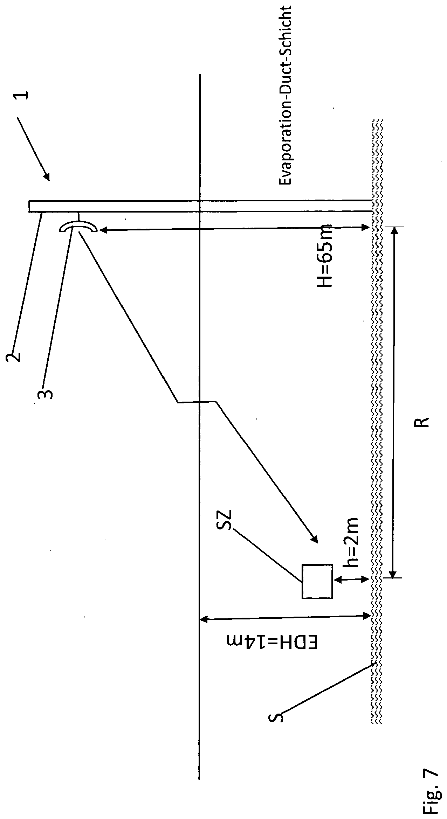

Fig. 7 zeigt beispielhaft eine erfindungsgemäße Anordnung, wobei unmittelbar über der Wasserfläche eine Evaporation-Duct-Schicht mit einer Höhe bis EDH=14m detektiert wurde. Außerdem ist zumindest in Höhen unter 70m keine Subrefractionsschicht vorhanden. Die Höhe der Radarantenne 3 wird unter diesen meteorologischen Bedingungen erfindungsgemäß auf eine Höhe H von 65m über der Wasser-/Meeresoberfläche S eingestellt. Es ist sichergestellt, dass unterhalb der Antenne keine Subrefractionsschicht vorhanden ist. Mit dieser Antennenhöhe kann unter den gegebenen meteorologischen Bedingungen eine optimierte Entdeckungsreichweite des Radars für eine entferntes Seeziel SZ (in einer beispielhaften Höhe h=2m und einem Abstand R) erreicht werden. Sie ergibt sich aus dem Diagramm nach Fig. 5.

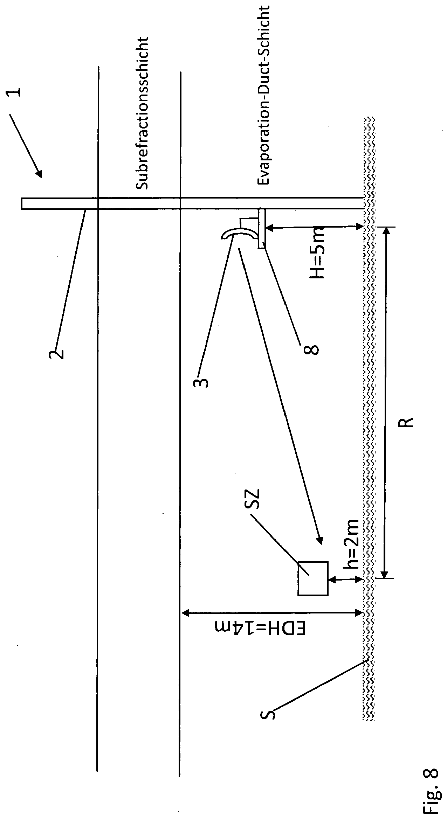

In Fig. 8 sind die meteorologischen Bedingungen derart, dass oberhalb der Evaporation-Duct-Schicht der Fig. 7 eine Subrefractionsschicht vorhanden ist. Erfindungsgemäß wurde die Radarantenne 3 am Antennenmast 2 mittels des Aufzugs 8 von der Höhe H=65 in eine Höhe H von 5m über der Meeresoberfläche S gebracht. Die Antenne befindet sich nunmehr unterhalb der Subrefractionsschicht und innerhalb der Evaporation-Duct-Schicht. Daraus resultiert nun eine optimierte Entdeckungsreichweite für ein Seeziel SZ (Höhe über See h=2m, Abstand R), die aus dem Diagramm gemäß Fig. 6 entnommen werden kann.

### Bezugszeichen

- 1: Anordnung
- 2: Antennenmast
- 3: Radarantenne
- 4: erste Schnittstelle
- 5: zweite Schnittstelle
- 6: erster Sensor
- 6a: Sensorsignal erster Sensor
- 7: zweiter Sensor
- 7a: Sensorsignal zweiter Sensor
- 8: Verschiebeeinrichtung
- 9: Auswerteeinrichtung
- 9a: Steuersignal
- 10: Ausgangsschnittstelle
- 11: Empfangen eines ersten Sensorsignals
- 12: Empfangen eines zweiten Sensorsignals
- 13: Ermitteln einer Antennenhöhe
- 14: Ausgeben eines Steuersignals
- 15: Verschieben der Radarantenne
- A: Bereich für Entdeckungswahrscheinlichkeit >90%
- B: Bereich für Entdeckungswahrscheinlichkeit 80-90%
- C: Bereich für Entdeckungswahrscheinlichkeit 70-80%
- D: Bereich für Entdeckungswahrscheinlichkeit 60-70%
- E: Bereich für Entdeckungswahrscheinlichkeit 50-60%
- S: Meeresoberfläche
- SZ: Seeziel

## Patentansprüche

1. Anordnung zur Einstellung der Höhe über See (S) einer Radarantenne (3), umfassend
einen Antennenmast (2)
eine Radarantenne (3), wobei die Radarantenne (3) an dem Antennenmast (2) höhenverschiebbar angeordnet ist,
**dadurch gekennzeichnet dass** die Anordnung weiter umfasst:
eine erste Eingangsschnittstelle (4), die ausgebildet ist, um ein erstes Sensorsignal (6a) zu empfangen, das zum Vorhandensein einer Subrefractions-Schicht über See (S) und zu einer Höhe und Dicke der Subrefractions-Schicht über See (S) korrespondiert,
eine zweite Eingangsschnittstelle (5), die ausgebildet ist, um ein zweites Sensorsignal (7a) zu empfangen, das zum Vorhandensein einer Evaporation-Duct-Schicht über See (S) und zu einer Höhe und Dicke der Evaporation-Duct-Schicht über See (S) korrespondiert,
eine Auswerteeinrichtung (9), die ausgebildet ist, um basierend auf dem ersten Sensorsignal (6a) und dem zweiten Sensorsignal (7a) eine Antennenhöhe über See (S) zu ermitteln, welche zu einer maximalen Detektionsreichweite der Radarantenne (3) korrespondiert,
eine Ausgangsschnittstelle (10), die ausgebildet ist, um ein Steuersignal (10a) auszugeben, das das Verschieben der Radarantenne (3) auf die von der Auswerteeinrichtung (9) bestimmte Antennenhöhe bewirkt.

2. Anordnung nach Anspruch 1, **dadurch gekennzeichnet, dass** ein Aufzug (8) zur Höhenänderung der Radarantenne (3) vorhanden ist.

3. Anordnung nach Anspruch 1 oder 2, **dadurch gekennzeichnet, dass** die Auswerteeinrichtung (9) ausgebildet ist, eine erste Antennenhöhe zu ermitteln, wenn das an der ersten Eingangsschnittstelle (4) empfangene erste Sensorsignal (6a) zu einem Nicht-Vorhandensein einer Subrefractions-Schicht über See (S) korrespondiert.

4. Anordnung nach einem der vorangehenden Ansprüche, **dadurch gekennzeichnet, dass** die Auswerteeinrichtung (9) ausgebildet ist, eine zweite Antennenhöhe zu ermitteln, wenn das an der ersten Eingangsschnittstelle (4) empfangene erste Sensorsignal (6a) zu einem Vorhandensein einer Subrefractions-Schicht über See (S) in einer ersten vorgegebenen Höhe über See (S) korrespondiert und wenn das an der zweiten Eingangsschnittstelle (5) empfangene zweite Sensorsignal (7a) zu einem Vorhandensein einer Evaporation-Duct-Schicht über See (S) in einer zweiten Höhe über See (S) korrespondiert, wobei die erste Höhe über See (S) kleiner als die zweite Höhe über See (S) ist.

5. Anordnung nach Anspruch 3 und 4, **dadurch gekennzeichnet, dass** die erste Antennenhöhe größer als die zweite Antennenhöhe ist.

6. Anordnung nach einem der vorangehenden Ansprüche, ferner umfassend zumindest einen mit der ersten Eingangsschnittstelle (4) verbundenen ersten Sensor (6), der ausgebildet ist, eine Subrefractions-Schicht zu detektieren und die Höhe und Dicke einer detektierten Subrefractions-Schicht über See (S) zu erfassen und das zum Vorhandensein einer Subrefractions-Schicht und zu einer Höhe und Dicke der Subrefractions-Schicht über See (S) korrespondierende erste Sensorsignal (6a) bereitzustellen.

7. Anordnung nach einem der vorangehenden Ansprüche, ferner umfassend zumindest einen mit der zweiten Eingangsschnittstelle (5) verbundenen zweiten Sensor (7), der ausgebildet ist, eine Evaporation-Duct-Schicht zu detektieren und die Höhe und Dicke einer detektierten Evaporation-Duct-Schicht über See (S) zu erfassen und das zum Vorhandensein einer Evaporation-Duct-Schicht und zu einer Höhe und Dicke der Evaporation-Duct-Schicht über See (S) korrespondierende zweite Sensorsignal (7a) bereitzustellen.

8. Verfahren zur Einstellung der Höhe über See (S) einer Radarantenne (3), umfassend die folgenden Schritte:
- Empfangen (11) eines erstes Sensorsignals (6a), das zum Vorhandensein einer Subrefractions-Schicht über See (S) und zu einer Höhe und Dicke der Subrefractions-Schicht über See (S) korrespondiert,
- Empfangen (12) eines zweiten Sensorsignals (7a), das zum Vorhandensein einer Evaporation-Duct-Schicht über See (S) und zu einer Höhe und Dicke der Evaporation-Duct-Schicht über See (S) korrespondiert,
- Ermitteln (13) einer Antennenhöhe über See (S) basierend auf dem ersten Sensorsignal (6a) und dem zweiten Sensorsignal (7a), welche zu einer maximalen Detektionsreichweite der Radarantenne (3) korrespondiert,
- Ausgeben (14) eines, das Verschieben (15) der Radarantenne (3) auf die ermittelte Antennenhöhe bewirkenden Steuersignals (10a).

9. Verfahren nach Anspruch 8, **dadurch gekennzeichnet, dass** zur Ermittlung des Vorhandenseins einer Subrefractions-Schicht und/oder einer Evaporation-Duct-Schicht die Clutterdaten der Radarantenne (3) verwendet werden.

## Claims

1. Assembly for adjusting the height above sea level (S) of a radar antenna (3), comprising an antenna mast (2)
a radar antenna (3), the radar antenna (3) being arranged such that it can be displaced in height on the antenna mast (2),
**characterized in that** the assembly further comprises:
a first input interface (4), which is designed to receive a first sensor signal (6a), which corresponds to the presence of a subrefraction layer above sea level (S) and to a height and thickness of the subrefraction layer above sea level (S),
a second input interface (5), which is designed to receive a second sensor signal (7a), which corresponds to the presence of an evaporation duct layer above sea level (S) and to a height and thickness of the evaporation duct layer above sea level (S),
an evaluation device (9), which is designed to determine on the basis of the first sensor signal (6a) and the second sensor signal (7a) an antenna height above sea level (S), which corresponds to a maximum detection range of the radar antenna (3),
an output interface (10), which is designed to output a control signal (10a), which brings about the displacement of the radar antenna (3) to the antenna height determined by the evaluation device (9).

2. Assembly according to Claim 1, **characterized in that** there is an elevator (8) for changing the height of the radar antenna (3).

3. Assembly according to Claim 1 or 2, **characterized in that** the evaluation device (9) is designed to determine a first antenna height if the first sensor signal (6a) received at the first input interface (4) corresponds to an absence of a subrefraction layer above sea level (S).

4. Assembly according to one of the preceding claims, **characterized in that** the evaluation device (9) is designed to determine a second antenna height if the first sensor signal (6a) received at the first input interface (4) corresponds to a presence of a subrefraction layer above sea level (S) at a first predetermined height above sea level (S) and if the second sensor signal (7a) received at the second input interface (5) corresponds to a presence of an evaporation duct layer above sea level (S) at a second height above sea level (S), the first height above sea level (S) being less than the second height above sea level (S).

5. Assembly according to Claims 3 and 4, **characterized in that** the first antenna height is greater than the second antenna height.

6. Assembly according to one of the preceding claims, further comprising at least one first sensor (6), which is connected to the first input interface (4) and is designed to detect a subrefraction layer and to ascertain the height and thickness of a detected subrefraction layer above sea level (S) and to provide the first sensor signal (6a), corresponding to the presence of a subrefraction layer and to a height and thickness of the subrefraction layer above sea level (S).

7. Assembly according to one of the preceding claims, further comprising at least one second sensor (7), which is connected to the second input interface (5) and is designed to detect an evaporation duct layer and to ascertain the height and thickness of a detected evaporation duct layer above sea level (S) and to provide the second sensor signal (7a), corresponding to the presence of an evaporation duct layer and to a height and thickness of the evaporation duct layer above sea level (S).

8. Method for adjusting the height above sea level (S) of a radar antenna (3), comprising the following steps:
- receiving (11) a first sensor signal (6a), which corresponds to the presence of a subrefraction layer above sea level (S) and to a height and thickness of the subrefraction layer above sea level (S),
- receiving (12) a second sensor signal (7a), which corresponds to the presence of an evaporation duct layer above sea level (S) and to a height and thickness of the evaporation duct layer above sea level (S),
- determining (13) an antenna height above sea level (S) on the basis of the first sensor signal (6a) and the second sensor signal (7a), which corresponds to a maximum detection range of the radar antenna (3),
- outputting (14) a control signal (10a), bringing about the displacement (15) of the radar antenna (3) to the determined antenna height.

9. Method according to Claim 8, **characterized in that** the clutter data of the radar antenna (3) are used for determining the presence of a subrefraction layer and/or an evaporation duct layer.

## Revendications

1. Arrangement de réglage de la hauteur au-dessus de la mer (S) d'une antenne radar (3), comprenant un mât d'antenne (2),
une antenne radar (3), l'antenne radar (3) étant montée sur le mât d'antenne (2) de manière à pouvoir coulisser en hauteur,
**caractérisé en ce que** l'arrangement comprend en outre :
une première interface d'entrée (4) qui est configurée pour recevoir un premier signal de capteur (6a), lequel correspond à la présence d'une couche d'infraréfraction au-dessus de la mer (S) et à une hauteur et une épaisseur de la couche d'infraréfraction au-dessus de la mer (S),
une deuxième interface d'entrée (5) qui est configurée pour recevoir un deuxième signal de capteur (7a), lequel correspond à la présence d'une couche de conduit d'évaporation au-dessus de la mer (S) et à une hauteur et une épaisseur de la couche de conduit d'évaporation au-dessus de la mer (S),
un dispositif d'interprétation (9) qui est configuré pour déterminer une hauteur d'antenne au-dessus de la mer (S) en se basant sur le premier signal de capteur (6a) et le deuxième signal de capteur (7a), laquelle correspond à une portée de détection maximale de l'antenne radar (3),
une interface de sortie (10) qui est configurée pour délivrer un signal de commande (10a), lequel provoque le déplacement de l'antenne radar (3) à la hauteur d'antenne déterminée par le dispositif d'interprétation (9) .

2. Arrangement selon la revendication 1, **caractérisé en ce qu'**il existe un élévateur (8) destiné à modifier la hauteur de l'antenne radar (3).

3. Arrangement selon la revendication 1 ou 2, **caractérisé en ce que** le dispositif d'interprétation (9) est configuré pour déterminer une première hauteur d'antenne lorsque le premier signal de capteur (6a) reçu au niveau de la première interface d'entrée (4) correspond à une non-présence d'une couche d'infraréfraction au-dessus de la mer (S).

4. Arrangement selon l'une des revendications précédentes, **caractérisé en ce que** le dispositif d'interprétation (9) est configuré pour déterminer une deuxième hauteur d'antenne lorsque le premier signal de capteur (6a) reçu au niveau de la première interface d'entrée (4) correspond à une présence d'une couche d'infraréfraction au-dessus de la mer (S) à une première hauteur prédéfinie au-dessus de la mer (S) et lorsque le deuxième signal de capteur (7a) reçu au niveau de la deuxième interface d'entrée (5) correspond à une présence d'une couche de conduit d'évaporation au-dessus de la mer (S) à une deuxième hauteur au-dessus de la mer (S), la première hauteur au-dessus de la mer (S) étant plus petite que la deuxième hauteur au-dessus de la mer (S).

5. Arrangement selon les revendications 3 et 4, **caractérisé en ce que** la première hauteur d'antenne est supérieure à la deuxième hauteur d'antenne.

6. Arrangement selon l'une des revendications précédentes, comprenant en outre au moins un premier capteur (6) relié à la première interface d'entrée (4), lequel est configuré pour détecter une couche d'infraréfraction et pour capter la hauteur et l'épaisseur d'une couche d'infraréfraction détectée au-dessus de la mer (S), et pour délivrer le premier signal de capteur (6a) correspondant à la présence d'une couche d'infraréfraction et à une hauteur et une épaisseur de la couche d'infraréfraction au-dessus de la mer (S).

7. Arrangement selon l'une des revendications précédentes, comprenant en outre au moins un deuxième capteur (7) relié à la deuxième interface d'entrée (5), lequel est configuré pour détecter une couche de conduit d'évaporation et pour capter la hauteur et l'épaisseur d'une couche de conduit d'évaporation détectée au-dessus de la mer (S), et pour délivrer le deuxième signal de capteur (7a) correspondant à la présente d'une couche de conduit d'évaporation et à une hauteur et une épaisseur de la couche de conduit d'évaporation au-dessus de la mer (S).

8. Procédé de réglage de la hauteur au-dessus de la mer (S) d'une antenne radar (3), comprenant les étapes suivantes :
- réception (11) d'un premier signal de capteur (6a), lequel correspond à la présence d'une couche d'infraréfraction au-dessus de la mer (S) et à une hauteur et une épaisseur de la couche d'infraréfraction au-dessus de la mer (S),
- réception (12) d'un deuxième signal de capteur (7a), lequel correspond à la présence d'une couche de conduit d'évaporation au-dessus de la mer (S) et à une hauteur et une épaisseur de la couche de conduit d'évaporation au-dessus de la mer (S),
- détermination (13) d'une hauteur d'antenne au-dessus de la mer (S) en se basant sur le premier signal de capteur (6a) et le deuxième signal de capteur (7a), laquelle correspond à une portée de détection maximale de l'antenne radar (3),
- délivrance (14) d'un signal de commande (10a), lequel provoque le déplacement (15) de l'antenne radar (3) à la hauteur d'antenne déterminée.

9. Procédé selon la revendication 8, **caractérisé en ce que** les données de fouillis d'échos de l'antenne radar (3) sont utilisées pour déterminer la présente d'une couche d'infraréfraction et/ou d'une couche de conduit d'évaporation.
